# EUROPEAN PATENT APPLICATION

(11) **EP 4 276 147 A1**
(43) Date of publication of application: **15.11.2023**
(21) Application number: 22893257.0
(22) Date of filing: 11.11.2022
(51) Int. Cl.: C08L 9/00, C08L 9/06, C08L 91/00, C08K 3/04, C08K 3/36

(54) **RUBBER COMPOSITION COMPRISING BIOELASTIC BODY, AND PREPARATION METHOD THEREFOR**

(30) Priority: 12.11.2021 KR 20210155903
(71) Applicant: LG Chem, Ltd., Yeoui-daero, Youngdungpo-gu Seoul 07336 (KR)
(72) Inventor: LEE, Ro Mi, Daejeon 34122 (KR); NA, Youk Reol, Daejeon 34122 (KR); KIM, Jin Young, Daejeon 34122 (KR)
(74) Representative: Plasseraud IP
(86) International application number: PCT/KR2022/017714
(87) International publication number: WO 2023/085838

(57) **Abstract**

The present invention relates to a rubber composition that has excellent viscoelastic properties and abrasion resistance while preventing aging over time, and thus is capable of being used for a long time, and a method for preparing the same.

## Description

### TECHNICAL FIELD

### Cross-reference to Related Applications

This application claims the benefit of Korean Patent Application No. 2021-0155903, filed on November 12, 2021, in the Korean Intellectual Property Office, all the disclosures of which are incorporated herein in its entirety by reference.

### Technical Field

The present invention relates to a rubber composition that has excellent viscoelastic properties and abrasion resistance while preventing aging over time, and thus is capable of being used for a long time, and a method for preparing the same.

### BACKGROUND ART

With the recent demand for low fuel consumption of automobiles, there has been a demand for a conjugated diene-based polymer as a rubber material for a tire, wherein the polymer has low rolling resistance, excellent abrasion resistance and tensile properties as well as control stability represented by wet road surface resistance.

In order to reduce rolling resistance of a tire, there is a way to reduce the hysteresis loss of vulcanized rubber, and as an evaluation index of such vulcanized rubber, repulsive elasticity of 50°C to 80°C, tanδ, Goodrich heat generation, and the like are used. That is, a rubber material having large repulsive elasticity at the above temperatures, or having a small tanδ or Goodrich heat generation is preferred.

As a rubber material having small hysteresis loss, natural rubber, polyisoprene rubber, polybutadiene rubber, or the like are known, but these have a problem of having low wet road surface resistance. Therefore, in recent years, a conjugated diene-based polymer or a copolymer such as styrene-butadiene rubber (hereinafter, referred to as SBR) or butadiene rubber (hereinafter, referred to as BR) has been produced by emulsion polymerization or solution polymerization and used as rubber for a tire. Among the above, the greatest advantage of solution polymerization over emulsion polymerization is that a vinyl structure content and a styrene content which define the physical properties of rubber may be arbitrarily adjusted, and a molecular weight, physical properties, and the like may be adjusted by coupling or modification. Therefore, it is easy to change the structure of a finally produced SBR or BR, and it is possible to decrease the movement of a chain end by coupling or modification of the chain end and to increase the coupling force with a filler such as silica or carbon black, so that SBR by solution polymerization is widely used as a rubber material for a tire.

When such a solution polymerization SBR is used as a rubber material for a tire, the content of vinyl in the SBR may be increased, thereby increasing the glass transition temperature of the rubber to adjust required physical properties of a tire such as driving resistance and braking force, and also, the glass transition temperature may be appropriately adjusted to reduce fuel consumption. The solution polymerization SBR is produced using an anionic polymerization initiator, and is used by coupling or modifying chain ends of a formed polymer using various modifiers. For example, US Patent No. 4,397,994 discloses a technique of coupling an active anion using a coupling agent such as a tin compound, the anion at a chain end of a polymer obtained by polymerizing styrene-butadiene using alkyllithium, which is a monofunctional initiator, in the presence of a non-polar solvent.

In addition, a dielectric SBR (oil-extended SBR) has been developed and used for the purpose of improving processability of the solution polymerization SBR.

The dielectric SBR is generally prepared by a method of preparing SBR by emulsion polymerization or solution polymerization, adding a petroleum-based oil before removing a solvent, and then removing the solvent, and since the petroleum-based oil remains in a polymer, the processability of the SBR is improved. The dielectric SBR is easily blended with other rubbers and additives when applied to a rubber composition containing the dielectric SBR, is not easily decomposed during processing, and has the property of providing more excellent characteristics to a final product, and thus is used in various fields to obtain a number of beneficial properties.

However, petroleum-based oils cause various environmental problems, so that it is necessary to develop products that may be applied to various industries by having effective characteristics of a dielectric SBR while being environmentally friendly.

### [Prior Art Document]

### [Patent Document]

(Patent Document 1) US 4397994 A
(Patent Document 2) KR 10-2020-0031529 A

### DISCLOSURE OF THE INVENTION

### TECHNICAL PROBLEM

An aspect of the present invention provides a rubber composition that has excellent viscoelastic properties and abrasion resistance while preventing aging over time, and thus, is capable of being used for a long time.

### TECHNICAL SOLUTION

According to an aspect of the present invention, there are provided a rubber composition and a method for preparing the same.
(1) The present invention provides a rubber composition including (a) a bio-elastomer including a first conjugated diene-based polymer-derived unit and a vegetable oil-derived unit, wherein the first conjugated diene-based polymer has a weight average molecular weight of less than 100,000 g/mol, and (b) a second conjugated diene-based polymer.
(2) In (1) above, the present invention provides a rubber composition, wherein the first conjugated diene-based polymer has a weight average molecular weight of 1,000 g/mol to 80,000 g/mol.
(3) In (1) or (2) above, the present invention provides a rubber composition, wherein the vegetable oil is one or more selected from the group consisting of soybean oil, rapeseed oil, canola oil, sunflower oil, flaxseed oil, rice bran oil, palm oil, olive oil, peanut oil, palm oil, cottonseed oil, and coconut oil.
(4) In any one of (1) to (3) above, the present invention provides a rubber composition, wherein the vegetable oil is an epoxidized vegetable oil, and is one or more selected from the group consisting of an epoxidized soybean oil, an epoxidized rapeseed oil, an epoxidized canola oil, an epoxidized sunflower oil, an epoxidized flaxseed oil, an epoxidized rice bran oil, an epoxidized palm oil, an epoxidized olive oil, an epoxidized peanut oil, an epoxidized palm oil, an epoxidized cottonseed oil, and an epoxidized coconut oil.
(5) In any one of (1) to (4) above, the present invention provides a rubber composition, wherein the second conjugated diene-based polymer comprises a repeating unit derived from a conjugated diene-based monomer and a repeating unit derived from an aromatic vinyl-based monomer.
(6) In any one of (1) to (5) above, the present invention provides a rubber composition, wherein the bio-elastomer is 5 parts by weight to 50 parts by weight based on 100 parts by weight of the second conjugated diene-based polymer.
(7) In any one of (1) to (6) above, the present invention provides a rubber composition further including a filler.
(8) In (7) above, the present invention provides a rubber composition, wherein the filler is one or more selected from the group consisting of a silica-based filler and a carbon-black filler.
(9) The present invention provides a method for preparing a rubber composition, the method including the steps of (S1) preparing a bio-elastomer including a first conjugated diene-based polymer-derived unit and a vegetable oil-derived unit, wherein the first conjugated diene-based polymer has a weight average molecular weight of less than 100,000 g/mol, (S2) preparing a second conjugated diene-based polymer by polymerizing a conjugated diene-based monomer, or a conjugated diene-based monomer and an aromatic vinyl-based monomer in the presence of a polymerization initiator in a hydrocarbon solvent, and (S3) mixing the bio-elastomer and the second conjugated diene-based polymer.
(10) In (9) above, the present invention provides a method for preparing a rubber composition, wherein the step (S1) is performed by including the steps of preparing an active polymer having a weight average molecular weight of less than 100,000 g/mol by polymerizing a conjugated diene-based monomer, and reacting the active polymer with a vegetable oil.
(11) In (10) above, the present invention provides a method for preparing a rubber composition, wherein the vegetable oil is 0.1 parts by weight to 50 parts by weight based on 100 parts by weight of the conjugated diene-based monomer.

### ADVANTAGEOUS EFFECTS

A rubber composition according to the present invention has excellent viscoelastic properties and abrasion resistance while preventing aging over time, and thus is capable of being used for a long time.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Hereinafter, the present invention will be described in detail.

In general, in order to improve flexibility, elasticity, blendability, and the like of a synthetic rubber such as a conjugated diene-based polymer, a synthetic rubber is mixed with a petroleum-based oil to manufacture a product. However, since the petroleum-based oil is not an environmentally friendly material and causes many environmental problems, the need to develop environmentally friendly materials is increasing.

In this regard, a method of using a plant-derived vegetable oil, which is an environmentally friendly material, instead of a petroleum-based oil has been devised. However, when a natural oil such as a vegetable oil or a liquid rubber having a low molecular weight is added when blending a rubber composition to improve abrasion resistance, or a natural oil is added to a polymerized rubber to manufacture a product by a stripping process, abrasion properties are improved, but due to a low viscosity, there are problems in that a lot of loss of input equipment occurs and fuel efficiency is degraded.

In addition, due to a migration phenomenon, when a natural oil is applied to a product such as a tire, there is a limitation in that deterioration of the physical properties due to aging is prominent.

In order to solve the above problem, the present invention uses a bio-elastomer prepared by reacting an anionic conjugated diene-based polymer with a vegetable oil in place of a petroleum-based oil or a natural oil which has been typically used when preparing a rubber composition. As a result, a rubber composition according to the present invention exhibits equally excellent viscoelastic properties, abrasion resistance, and the like, and has an effect of improving stability of physical properties by suppressing an aging phenomenon.

### Rubber composition

The rubber composition of the present invention includes (a) a bio-elastomer including a first conjugated diene-based polymer-derived unit and a vegetable oil-derived unit, wherein the first conjugated diene-based polymer has a weight average molecular weight of less than 100,000 g/mol, and (b) a second conjugated diene-based polymer.

### (a) Bio-elastomer

In the present invention, the bio-elastomer includes a first conjugated diene-based polymer-derived unit and a vegetable oil-derived unit.

In the present specification, the term '-derived unit' may mean a component or structure derived from a material, or the material itself. The first conjugated diene-based polymer-derived unit may mean a repeating unit formed when a conjugated diene-based monomer constituting the first conjugated diene-based polymer is polymerized, and the vegetable oil-derived unit may mean a structure derived from a vegetable oil compound.

The bio-elastomer of the present invention may mean a biomass which is a renewable organic resource, that is, a dielectric conjugated diene-based polymer obtained by reacting a vegetable oil and a first conjugated diene-based polymer. For example, the bio-elastomer may be a material obtained by reacting a vegetable oil, such as triglyceride obtained from a plant, with an active polymer prepared by performing living anion polymerization on a conjugated diene-based monomer, that is, an anionic conjugated diene-based polymer.

The bio-elastomer prepared by the reaction includes a first conjugated diene-based polymer-derived unit derived from a first conjugated diene-based polymer and a vegetable oil-derived unit derived from a vegetable oil.

The first conjugated diene-based polymer may be prepared by polymerizing a conjugated diene-based monomer, and thus may include a conjugated diene-based monomer-derived unit, wherein the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene, and 2-halo-1,3-butadiene (halo means a halogen atom), and specifically, may be 1,3-butadiene, but is not limited thereto.

In addition, the first conjugated diene-based polymer may further include an aromatic vinyl-based monomer-derived repeating unit, in which case the first conjugated diene-based polymer may be a copolymer including a conjugated diene-based monomer-derived repeating unit and an aromatic vinyl monomer-derived repeating unit. Here, the aromatic vinyl monomer-derived repeating unit may mean a repeating unit formed when an aromatic vinyl-based monomer is polymerized.

The aromatic vinyl monomer may be, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl)styrene, 4-(2-pyrrolidino ethyl)styrene (4-(2-pyrrolidino ethyl) ) styrene), and 3-(2-pyrrolidino-1-methyl ethyl)methyl styrene, but is not limited thereto.

The first conjugated diene-based polymer has a weight average molecular weight of less than 100,000 g/mol. In addition, the weight average molecular weight may preferably be 1,000 g/mol or greater, 5,000 g/mol or greater, 10,000 g/mol or greater, 80,000 g/mol or less, 50,000 g/mol or less, 30,000 g/mol or less, for example, 1,000 g/mol to 80,000 g/mol, or 5,000 g/mol to 50,000 g/mol.

As described above, by obtaining a bio-elastomer using a conjugated diene-based polymer with a low weight average molecular weight of less than 100,000 g/mol, it is possible to use the bio-elastomer for various purposes by exhibiting excellent processability.

The bio-elastomer has a form in which a vegetable oil-derived unit is coupled with a conjugated diene-based polymer-derived unit with a low weight average molecular weight in the above range, and has advantages in terms of stability and durability compared to when a liquid polymer is used, and may significantly suppress the degradation in physical properties due to an oil migration phenomenon occurring in a tire.

For example, when the conjugated diene-based monomer is 1,3-butadiene, the first conjugated diene-based polymer may be polybutadiene prepared by polymerization until the weight average molecular weight of the 1,3-butadiene is less than 100,000 g/mol.

The bio-elastomer includes a vegetable oil-derived unit together with a first conjugated diene-based polymer-derived unit.

In general, a vegetable oil is a triglyceride molecule represented by Formula 1 below.

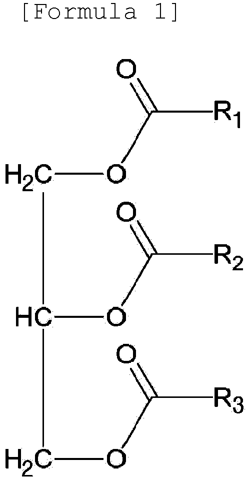

In Formula 1 above,
R₁ to R₃ are each a radical of an ester derived from a fatty acid, and are each an unsaturated or saturated hydrocarbon group.

Here, the relative ratio of R₁ to R₃ may vary depending on the type of a vegetable oil, and may exemplarily be as shown in Table 1 below.

**[Table 1]**

| Vegetable oil | Saturated (wt%, R₁) | Monounsat urated (wt%, R₂) | Polyunsat urated (wt%, R₃) |
|---|---|---|---|
| Soybean oil | 17 | 23 | 60 |
| Sunflower oil | 10 | 45 | 40 |
| Canola oil | 7 | 63 | 28 |
| Flaxseed oil | 10 | 45 | 40 |
| Olive oil | 14 | 73 | 11 |
| Peanut oil | 17 | 46 | 32 |
| Cottonseed oil | 26 | 18 | 52 |
| Coconut oil | 49 | 37 | 9 |
| Olive oil | 14 | 73 | 11 |

As another example, the vegetable oil may be an epoxidized vegetable oil. The epoxidized vegetable oil is an organic compound obtained by an epoxidation reaction of a vegetable oil, and the degree of epoxidation (epoxy rate) may be different depending on the type of the vegetable oil. The epoxidation of a vegetable oil is achieved by adding an oxygen atom to an unsaturated bond in a vegetable oil molecule, and generating an epoxide, and the degree of epoxidation may be affected by an unsaturated bond ratio in the vegetable oil. The epoxidized vegetable oil may be one or more selected from the group consisting of an epoxidized soybean oil, an epoxidized rapeseed oil, an epoxidized canola oil, an epoxidized sunflower oil, an epoxidized flaxseed oil, an epoxidized rice bran oil, an epoxidized palm oil, an epoxidized olive oil, an epoxidized peanut oil, an epoxidized palm oil, an epoxidized cottonseed oil, and an epoxidized coconut oil, preferably an epoxidized soybean oil, an epoxidized cottonseed oil, or a combination thereof, and more preferably an epoxidized soybean oil, but is not limited thereto.

In the present invention, the vegetable oil-derived unit may be 1 wt% to 50 wt%, preferably 1 wt% to 30 wt%, or 1 wt% to 20 wt% based on the total weight of the bio-elastomer. The content of the vegetable oil-derived unit may be determined by the input amount of a vegetable oil used when preparing a bio-elastomer, and for example, the parts by weight of a vegetable oil based on 100 parts by weight of a conjugated diene-based monomer used in the preparation of a first conjugated diene-based polymer may be the content of the vegetable oil-derived unit in the bio-elastomer.

Within the above range, the coupling to the first conjugated diene-based polymer is facilitated, so that there is an advantage in that the bio-elastomer is efficiently formed.

In the present invention, the bio-elastomer may be 5 parts by weight to 50 parts by weight, specifically 5 parts by weight or greater, 7 parts by weight or greater, 30 parts by weight or less, 20 parts by weight or less, or 15 parts by weight or less based on 100 parts by weight of a second conjugated diene-based polymer in a rubber composition.

In addition, the bio-elastomer may be 5 wt% to 50 wt%, preferably 5 wt% to 40 wt%, or 5 wt% to 30 wt% based on the total weight of the rubber composition.

Within the above range, the bio-elastomer may exhibit excellent processability, thereby being used for various purposes, and the rubber composition may exhibit excellent viscoelastic properties and abrasion resistance.

### (b) Second conjugated diene-based polymer

In the present invention, the rubber composition includes a second conjugated diene-based polymer together with the bio-elastomer.

The second conjugated diene-based polymer distinguished by having a higher weight average molecular weight than the first conjugated diene-based polymer of a first conjugated diene-based polymer-derived unit included in the bio-elastomer, and the first conjugated diene-based polymer-derived unit forms a bond with a vegetable oil-derived unit in the bio-elastomer, whereas the second conjugated diene-based polymer is included as a material separated from the bio-elastomer in the rubber composition.

The second conjugated diene-based polymer includes a conjugated diene-based monomer-derived repeating unit, wherein the conjugated diene-based monomer-derived repeating unit may mean a repeating unit formed when a conjugated diene-based monomer is polymerized.

In addition, the second conjugated diene-based polymer may further include an aromatic vinyl-based monomer-derived repeating unit, in which case the second conjugated diene-based polymer may be a copolymer including a conjugated diene-based monomer-derived repeating unit and an aromatic vinyl monomer-derived repeating unit. Here, the aromatic vinyl monomer-derived repeating unit may mean a repeating unit formed when an aromatic vinyl-based monomer is polymerized.

According to an embodiment of the present invention, the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene, and 2-halo-1,3-butadiene (halo means a halogen atom), but is not limited thereto.

The aromatic vinyl monomer may be, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl)styrene, 4-(2-pyrrolidino ethyl)styrene (4-(2-pyrrolidino ethyl) ) styrene), and 3-(2-pyrrolidino-1-methyl ethyl)methyl styrene, but is not limited thereto.

The second conjugated diene-based polymer may be a copolymer further including a C1 to C10 diene-based monomer-derived repeating unit together with the conjugated diene-based monomer-derived repeating unit. The diene-based monomer-derived repeating unit may be a repeating unit derived from a diene-based monomer different from the conjugated diene-based monomer, and the diene-based monomer different from the conjugated diene-based monomer may be, for example, 1,2-butadiene. When the second conjugated diene-based polymer is a copolymer further including a diene-based monomer, the second conjugated diene-based polymer may include a diene-based monomer-derived repeating unit in an amount of greater than 0 wt% to 1 wt%, greater than 0 wt% to 0.1 wt%, greater than 0 wt% to 0.01 wt%, or greater than 0 wt% to 0.001 wt%, and within the range, there is an effect of preventing gel generation.

According to an embodiment of the present invention, the copolymer may be a random copolymer, in which case there is an effect in that the balance between physical properties is excellent. The random copolymer may mean that repeating units constituting the copolymer are randomly arranged.

In the present invention, the second conjugated diene-based polymer may have a number average molecular weight of 1,000 g/mol to 2,000,000 g/mol, 10,000 g/mol to 1,000,000 g/mol, or 100,000 g/mol to 800,000 g/mol, and within the range, there may be an effect in that rolling resistance and wet road surface resistance are excellent.

In the present invention, the second conjugated diene-based polymer may have a weight average molecular weight of 1,000 g/mol to 3,000,000 g/mol or 10,000 g/mol to 2,000,000 g/mol, and within the corresponding range, there may be an effect in that rolling resistance, wet road surface resistance, abrasion resistance are excellent.

In addition, the second conjugated diene-based polymer may have a vinyl content of 5 wt% or greater, 10 wt% or greater, 15 wt% or greater, 20 wt% or greater, 60 wt% or less, 50 wt% or less, 40 wt% or less, 30 wt% or less, for example, 10 wt% to 60 wt%, 20 to 50 wt%, 20 to 40 wt%, or 20 to 30 wt%. Here, the vinyl content may mean the content of a 1,2-added conjugated diene-based monomer, not a 1,4-added conjugated diene-based monomer, based on the total weight of the second conjugated diene-based polymer composed of a monomer having a vinyl group and an aromatic vinyl-based monomer.

In the present invention, the second conjugated diene-based polymer may be included in an amount of 10 wt% or greater, 10 wt% to 100 wt%, or 20 wt% to 90 wt% based on the total weight of the rubber composition and within the above range, there may be an effect in that mechanical properties such as tensile strength and abrasion resistance are excellent, and the balance between physical properties is excellent.

In the present invention, the rubber composition may further include, in addition to the second conjugated diene-based polymer, another rubber component if necessary.

The another rubber component may be included in an amount of 90 wt% or less based on the total weight of the rubber composition. As a specific example, the another rubber component may be included in an amount of 1 part by weight to 900 parts by weight based on 100 parts by weight of the second conjugated diene-based polymer.

The rubber component may be, for example, a natural rubber or a synthetic rubber, and may be, as a specific example, natural rubber (NR) including cis-1,4-polyisoprene; a modified natural rubber such as an epoxidized natural rubber (ENR), a deproteinized natural rubber (DPNR), and a hydrogenated natural rubber obtained by modifying or refining the general natural rubber; a synthetic rubber such as a styrene-butadiene copolymer (SBR), polybutadiene (BR), polyisoprene (IR), a butyl rubber (IIR), an ethylene-propylene copolymer, polyisobutylene-co-isoprene, neoprene, poly(ethylene-co-propylene), poly(styrene-co-butadiene), poly(styrene-co-isoprene), poly(styrene-co-isoprene-co-butadiene), poly(isoprene-co-butadiene), poly(ethylene-co-propylene-co-diene), a polysulfide rubber, an acrylic rubber, a urethane rubber, a silicone rubber, an epichlorohydrin rubber, and a halogenated butyl rubber, and any one or a mixture of two or more thereof may be used.

In the present invention, the rubber composition may further include a filler, and the filler may be included in an amount of 0.1 parts by weight to 200 parts by weight, or 10 parts by weight to 120 parts by weight based on 100 parts by weight of the second conjugated diene-based polymer.

The filler may be, for example, a silica-based filler, and may be, as a specific example, wet silica (hydrous silicic acid), dry silica (anhydrous silicic acid), calcium silicate, aluminum silicate, colloidal silica, or the like, and may be, preferably, wet silica having the most excellent dual effects of improving fracture properties and wet grip. In addition, the rubber composition may further include a carbon-based filler, if necessary.

When silica is used as the filler, a silane coupling agent may be used together in order to improve reinforcement properties and low exothermic properties, and as a specific example, the silane coupling agent may be bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, or the like, and any one or a mixture of two or more thereof may be used. Preferably, when considering the effect of improving reinforcement properties, the silane coupling agent may be bis(3-triethoxysilylpropyl)polysulfide or 3-trimethoxysilylpropylbenzothiazyltetrasulfide.

The silane coupling agent may be used in an amount of 1 part by weight to 20 parts by weight, or 5 parts by weight to 15 parts by weight based on 100 parts by weight of silica, and within the range, the silane coupling agent has an effect of preventing gelation of a rubber component while sufficiently exhibiting an effect as a coupling agent.

In the present invention, the rubber composition may be sulfur cross-linkable, and may further include a vulcanization agent. Specifically, the vulcanization agent may be sulfur powder, and may be included in an amount of 0.1 parts by weight to 10 parts by weight based on 100 parts by weight of the rubber component, and within the range, an elastic modulus and strength required of a vulcanized rubber composition are secured, and at the same time, there is an effect in that low fuel consumption properties are excellent.

In the present invention, the rubber composition may further include, in addition to the above-described components, various additives commonly used in the rubber industry, specifically, a vulcanization accelerator, a process oil, an antioxidant, a plasticizer, an anti-aging agent, an antiscorch agent, a zinc white, a stearic acid, a thermosetting resin, a thermoplastic resin, or the like.

For example, as the vulcanization accelerator, a thiazole-based compound such as 2-mercaptobenzothiazole (M), dibenzothiazyldisulfide (DM), and N-cyclohexyl-2-benzothiazylsulfenamide (CZ), or a guanidine-based compound such as diphenylguanidine (DPG) may be used.

The process oil acts as a softening agent in the rubber composition, and for example, may be a paraffinic, naphthenic, or aromatic compound, and when considering tensile strength and abrasion resistance, an aromatic process oil may be used, and when considering hysteresis losses, and low-temperature properties, a naphthenic or paraffinic process oil may be used. The process oil may be included, for example, in an amount of 100 parts by weight or less based on 100 parts by weight of the rubber component, and within the range, there is an effect of preventing degradation in tensile strength and low exothermic properties (low fuel consumption properties) of a vulcanized rubber.

The antioxidants may be, for example, 2,6-di-t-butylparacresol, dibutylhydroxytoluenyl, 2,6-bis((dodecylthio)methyl)-4-nonylphenol, or 2-methyl-4,6-bis((octylthio)methyl)phenol, and may be used in an amount of 0.1 parts by weight to 6 parts by weight based on 100 parts by weight of the rubber component.

The anti-aging agent may be, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a high-temperature condensate of diphenylamine and acetone, and may be used in an amount of 0.1 parts by weight to 6 parts by weight based on 100 parts by weight of the rubber component.

In the present invention, the rubber composition may be obtained by kneading using a kneader such as a banbury mixer, a roll, and an internal mixer according to the above formulation, and a rubber composition which is low exothermic and has excellent abrasion resistance may be obtained by a vulcanization process after molding processing.

Accordingly, the rubber composition may be useful in manufacturing each member of a tire such as a tire tread, an under tread, a side wall, a carcass coated rubber, a belt coated rubber, a bead filler, a wiper, and a bead coated rubber, and various industrial rubber products such as a dust-proof rubber, a belt conveyor, and a hose.

### Method for preparing rubber composition

A method for preparing a rubber composition of the present invention includes the steps of (S1) preparing a bio-elastomer including a first conjugated diene-based polymer-derived unit and a vegetable oil-derived unit, wherein the first conjugated diene-based polymer has a weight average molecular weight of less than 100,000 g/mol, (S2) preparing a second conjugated diene-based polymer by polymerizing a conjugated diene-based monomer, or a conjugated diene-based monomer and an aromatic vinyl-based monomer in the presence of a polymerization initiator in a hydrocarbon solvent, and (S3) mixing the bio-elastomer and the second conjugated diene-based polymer.

The bio-elastomer, the first conjugated diene-based polymer, the vegetable oil, and the second conjugated diene-based polymer are the same as those described above.

### Step (S1)

In the step (S1), a bio-elastomer including a first conjugated diene-based polymer-derived unit and a vegetable oil-derived unit is prepared, wherein the first conjugated diene-based polymer has a weight average molecular weight of less than 100,000 g/mol.

For example, the step (S1) may be performed by including the steps of preparing an active polymer having a weight average molecular weight of less than 100,000 g/mol by polymerizing a conjugated diene-based monomer, and reacting the active polymer with a vegetable oil.

Here, the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene, and 2-halo-1,3-butadiene (halo means a halogen atom), and may be, specifically, 1,3-butadiene, but is not limited thereto.

In the present invention, the vegetable oil may be 0.1 parts by weight to 50 parts by weight, 0.1 parts by weight or greater, 1 part by weight or greater, 3 parts by weight or greater, 50 parts by weight or less, 30 parts by weight or less, 20 parts by weight or less, or 15 parts by weight or less based on 100 parts by weight of the conjugated diene-based monomer. Within the above range, the active polymer and the vegetable oil are reacted with an excellent efficiency, so that a bio-elastomer including the first conjugated diene-based polymer-derived unit and the vegetable oil-derived unit may be easily prepared.

### Step (S2)

In the step (S2), a second conjugated diene-based polymer is prepared by polymerizing a conjugated diene-based monomer, or a conjugated diene-based monomer and an aromatic vinyl-based monomer in the presence of a polymerization initiator in a hydrocarbon solvent.

The hydrocarbon solvent is not particularly limited, but may be, for example, one or more selected from the group consisting of n-pentane, n-hexane, n-heptane, isooctane, cyclohexane, toluene, benzene, and xylene.

In the present invention, the polymerization initiator may be used in an amount of 0.01 to 10 mmol, 0.05 to 5 mmol, 0.1 to 2 mmol, 0.1 to 1 mmol, or 0.15 to 0.8 mmol based on a total of 100 g of a monomer.

The polymerization initiator is not particularly limited, but may be, for example, one or more selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyllithium, 4-butylphenyllithium, 4-tolyllithium, cyclohexyllithium, 3-5-di-n-heptylcyclohexyllithium, 4-cyclopentyllithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide.

In the present invention, the polymerization of the step (S2) may be, for example, anionic polymerization, and as a specific example, may be living anionic polymerization having an anionic active site at the end of polymerization by a growth polymerization reaction by anions. In addition, the polymerization in the step (S1) may be temperature elevation polymerization, isothermal polymerization, or constant temperature polymerization (adiabatic polymerization), wherein the constant temperature polymerization may mean a polymerization method including a step of adding a polymerization initiator and then performing polymerization with a self-reaction heat without arbitrarily applying heat, the temperature elevation polymerization may mean a polymerization method of adding a polymerization initiator and then arbitrarily applying heat to increase the temperature, and the isothermal polymerization may mean a polymerization method of adding a polymerization initiator and then applying heat to increase the heat or removing heat to maintain the temperature of a polymer constant.

The polymerization of the step (S2) may be performed by further including a C1 to C10 diene-based compound in addition to the conjugated diene-based monomer, in which case there is an effect of preventing gel formation on the wall of a reactor during a long-term operation. An example of the diene-based compound may be 1,2-butadiene.

The polymerization of the step (S2) may be performed in a temperature range of 80°C or less, -20 to 80°C, 0 to 80°C, 0 to 70°C, or 10 to 70°C, and within this range, the molecular weight distribution of a polymer may be controlled to be narrow, so that there is an excellent effect of improving physical properties.

Meanwhile, the polymerization of the step (S2) may be performed by including a polar additive, wherein the polar additive may be added in a ratio of 0.001 g to 50 g, 0.001 g to 10 g, or 0.005 g to 0.1 g based on a total of 100 g of a monomer. As another example, the polar additive may be added in a ratio of 0.001 g to 10 g, 0.005 g to 5 g, or 0.005 g to 4 g based on a total of 1 mmol of an organolithium compound.

The polar additive may be, for example, one or more selected from the group consisting of tetrahydrofuran, 2,2-di(2-tetrahydrofuryl)propane, diethyl ether, cyclopentyl ether, dipropyl ether, ethylene methyl ether, ethylene dimethyl ether, diethyl glycol, dimethyl ether, tertiary butoxyethoxyethane, bis(3-dimethylaminoethyl)ether, (dimethylaminoethyl)ethyl ether, trimethylamine, triethylamine, tripropylamine, N,N,N',N'-tetramethylethylenediamine, sodium mentholate, and 2-ethyl tetrahydrofurfuryl ether, and may be, preferably, triethylamine, tetramethylethylenediamine, sodium mentholate, or 2-ethyl tetrahydrofurfuryl ether, and when the polar additive is included, in the case of copolymerizing a conjugated diene-based monomer or a conjugated diene-based monomer and an aromatic vinyl-based monomer, the difference in reaction rate thereof is compensated, so that there is an effect of inducing a random copolymer to be easily formed.

The step (S2) may include a step of preparing an active polymer through polymerization of a conjugated diene-based monomer or copolymerization of a conjugated diene-based monomer and an aromatic vinyl-based monomer, and then terminating the reaction, wherein the active polymer may mean a polymer in which a polymer anion and an organometallic cation are bonded.

Alternatively, the step (S2) may include a step of reacting or coupling the active polymer and a denaturant after preparing the active polymer. The denaturant may be used in an amount of 0.01 mmol to 10 mmol based on a total of 100 g of a monomer. As another example, the denaturant may be used in a molar ratio of 1:0.1 to 10, 1:0.1 to 5, or 1:0.1 to 1:3 based on 1 mole of the polymerization initiator of the step (S2).

### Step (S3)

The step (S3) is a step for preparing a rubber composition, and may be performed by mixing the bio-elastomer prepared in the step (S1) and the second conjugated diene-based polymer prepared in the step (S2).

In addition, the present invention provides a tire manufactured by using the rubber composition.

The tire may include a tire or a tire tread.

### Examples

Hereinafter, the present invention will be described in detail with reference to examples. However, the following examples are merely illustrative of the present invention and are not intended to limit the scope of the present invention.

### [Preparation of bio-elastomer]

### Preparation Example 1

700 g of n-hexane, 100 g of 1,3-butadiene, and 0.4 g of 2,2-bis(2-oxolanyl)propane as a polar additive were added to a 2 L autoclave reactor, and then 16.4 g (6 wt% in hexane) of n-butyllithium was added thereto, and the temperature inside the reactor was set to 50°C followed by performing an adiabatic temperature elevation reaction. An additional adiabatic temperature elevation reaction was performed at 60°C for about 30 minutes to prepare a first conjugated diene-based polymer. At this time, a portion of a polymer was collected after the reaction, and used as a sample for measuring the weight average molecular weight of a first conjugated diene-based polymer chain. At this time, the sample was dried in an oven at 140°C to remove a residual solvent, and then dissolved in THF to be used.

Thereafter, 5 g of soybean oil was added and mixed at 70°C for 20 minutes. The reaction was stopped using ethanol, and 3 g of a solution in which 30 wt% of Wingstay K as an antioxidant was dissolved in hexane was added. A polymer obtained thereby was put in hot water heated with steam and then stirred to remove a solvent, and roll-dried to remove a residual solvent and water to prepare a bio-elastomer.

### Preparation Example 2

A bio-elastomer was prepared in the same manner as in Preparation Example 1 except that 5 g of an epoxidized soybean oil was used instead of 5 g of the soybean oil.

### Preparation Example 3

700 g of n-hexane, 100 g of 1,3-butadiene, and 0.03 g of 2,2-bis(2-oxolanyl)propane as a polar additive were added to a 2 L autoclave reactor, and then 16.4 g (6 wt% in hexane) of n-butyllithium was added thereto, and the temperature inside the reactor was set to 60°C followed by performing an adiabatic temperature elevation reaction. An additional adiabatic temperature elevation reaction was performed at 70°C for about 30 minutes. At this time, a portion of a polymer was collected after the reaction, and used as a sample for measuring the weight average molecular weight of a first conjugated diene-based polymer chain.

Thereafter, 5 g of soybean oil was added and mixed at 70°C for 20 minutes. The reaction was stopped using ethanol, and 3 g of a solution in which 30 wt% of Wingstay K as an antioxidant was dissolved in hexane was added. A polymer obtained thereby was put in hot water heated with steam and then stirred to remove a solvent, and roll-dried to remove a residual solvent and water to prepare a bio-elastomer.

### Preparation Example 4

A bio-elastomer was prepared in the same manner as in Preparation Example 3 except that 5 g of an epoxidized soybean oil was used instead of 5 g of the soybean oil.

### Preparation Example 5

A bio-elastomer was prepared in the same manner as in Preparation Example 3 except that 10 g of soybean oil was used instead of 5 g of the soybean oil.

### Comparative Preparation Example 1

700 g of n-hexane, 100 g of 1,3-butadiene, and 0.4 g of 2,2-bis(2-oxolanyl)propane as a polar additive were added to a 2 L autoclave reactor, and then 16.4 g (6 wt% in hexane) of n-butyllithium was added thereto, and the temperature inside the reactor was set to 50°C followed by performing an adiabatic temperature elevation reaction. An additional adiabatic temperature elevation reaction was performed at 60°C for about 30 minutes. The reaction was stopped using ethanol, and 3 g of a solution in which 30 wt% of Wingstay K as an antioxidant was dissolved in hexane was added. A polymer obtained thereby was put in hot water heated with steam and then stirred to remove a solvent, and roll-dried to remove a residual solvent and water to prepare a liquid polymer.

### Comparative Preparation Example 2

700 g of n-hexane, 100 g of 1,3-butadiene, and 0.03 g of 2,2-bis(2-oxolanyl)propane as a polar additive were added to a 2 L autoclave reactor, and then 16.4 g (6 wt% in hexane) of n-butyllithium was added thereto, and the temperature inside the reactor was set to 60°C followed by performing an adiabatic temperature elevation reaction. An additional adiabatic temperature elevation reaction was performed at 70°C for about 30 minutes. The reaction was stopped using ethanol, and 3 g of a solution in which 30 wt% of Wingstay K as an antioxidant was dissolved in hexane was added. A polymer obtained thereby was put in hot water heated with steam and then stirred to remove a solvent, and roll-dried to remove a residual solvent and water to prepare a liquid polymer.

### [Analysis of bio-elastomer]

### Experimental Example 1

### 1) Vinyl content (wt%)

The vinyl content in each of the polymers was measured and analyzed using a Varian VNMRS 500 MHz NMR.

During the NMR measurement, 1,1,2,2-tetrachloroethane was used as a solvent, and a solvent peak was calculated as 5.97 ppm, and 75.8 to 5.1 ppm was set as a peak for 1,4-vinyl and 1,2-vinyl, and 5.1 to 4.5 ppm was set as a peak for 1,2-vinyl to calculate a vinyl content.

### 2) Weight average molecular weight (Mw, X10³ g/mol), number average molecular weight (Mn, X10³ g/mol) and molecular weight distribution (PDI, MWD)

The weight average molecular weight (Mw) and the number average molecular weight (Mn) were measured and the molecular weight distribution curve was obtained under the following conditions using a gel permeation chromatograph (GPC) (PL GPC220, Agilent Technologies), and the molecular weight distribution (PDI, MWD, Mw/Mn) was calculated and obtained from each of the measured molecular weights.
- Column: Two PLgel Olexis(Polymer Laboratories Co., Ltd) columns and one PLgel mixed-C(Polymer Laboratories Co., Ltd) column were used in combination.
- Solvent: Using a mixture of 2 wt% an amine compound in tetrahydrofuran
- Flow rate: 1 ml/min
- Sample concentration: 1 to 2 mg/ml (Diluted in THF)
- Injection amount: 100 *µ*ℓ
- Column temperature: 40°C
- Detector: Refractive index
- Standard: Polystyrene (Calibrated with a tertiary function)

**[Table 2]**

| | | Preparation Examples | | | | | Comparative Preparation Examples | |
|---|---|---|---|---|---|---|---|---|
| | | 1 | 2 | 3 | 4 | 5 | 1 | 2 |
| NMR (wt%) | Vinyl | 45 | 44 | 11 | 11 | 11 | 45 | 12 |
| Input amount of vegetable oil (g) | | 5 | 5 | 5 | 5 | 10 | - | - |
| GPC | Mw | 23.2 | 32.1 | 25.0 | 24.0 | 24.2 | 15.5 | 15.2 |
| | Mn | 20.0 | 26.1 | 20.8 | 20.5 | 20.2 | 14.8 | 14.2 |
| | MWD | 1.16 | 1.38 | 1.20 | 1.17 | 1.20 | 1.05 | 1.07 |

As shown in the above result, it was confirmed that the bio-elastomer used in the present invention contains a unit derived from the first conjugated diene-based polymer having a weight average molecular weight of 100,000 g/mol or less.

### [Preparation of rubber composition]

### Example 1

As the second conjugated diene-based polymer, SSBR F3626Y of LG Chem was used as a raw rubber, and a rubber specimen was prepared using a blending (Ga) method of Table 3 below. The raw material content in the table below shows parts by weight based on 100 parts by weight of the raw rubber.

**[Table 3]**

| Classifications | Raw materials | Blending (Ga) | Blending (Na) |
|---|---|---|---|
| | | Content (part by weight) | Content (part by weight) |
| First stage kneading | Raw rubber | 100 | 100 |
| | Silica | 70 | 70 |
| | Coupling agent (X50S) | 11.2 | 11.2 |
| | Bio-elastomer or liquid polymer | 10 | - |
| | Process oil | 27.5 | 37.5 |
| | Zinc white agent | 3 | 3 |
| | Stearic acid | 2 | 2 |
| | Antioxidant | 2 | 2 |
| | Anti-aging agent | 2 | 2 |
| | Wax | 1 | 1 |
| Second stage kneading | Sulfur | 1.8 | 1.5 |
| | Rubber accelerator | 2.40 | 1.75 |
| | Vulcanization accelerator | 2 | 2 |

Specifically, the rubber specimen is kneaded through a first stage kneading and a second stage kneading. In the first stage kneading, using a banbury mixer having a temperature control device, the raw rubber, silica (a filler), an organosilane coupling agent (X50S, Evonik), a bio-elastomer according to Preparation Example 1, a zinc white agent (ZnO), a stearic acid, an antioxidant (TMQ(RD)) (2,2,4-trimethyl-1,2-dihydroquinoline polymer), an anti-aging agent (6PPD ((dimethylbutyl)-N-phenyl-phenylenediamine)) and a wax (Microcrystaline Wax) were kneaded. At this time, the initial temperature of a kneader was controlled to 70°C, and after the completion of the blending, a primary blend was obtained at a discharge temperature of 145 to 155°C. In the second stage kneading, the primary blend was cooled to room temperature, and then the primary blend, sulfur, a rubber accelerator (diphenylguanine (DPD)), and a vulcanization accelerator (N-cyclohexyl-2-benzothiazylsulfenamide (CZ)) were added to the kneader, and then mixed at a temperature of 100°C or lower to obtain a secondary blend. Thereafter, a curing process was performed at 160°C for 20 minutes to prepare a rubber specimen.

### Example 2

A rubber specimen was prepared in the same manner as in Example 1 except that the bio-elastomer of Preparation Example 2 was used instead of the bio-elastomer of Preparation Example 1.

### Example 3

A rubber specimen was prepared in the same manner as in Example 1 except that the bio-elastomer of Preparation Example 3 was used instead of the bio-elastomer of Preparation Example 1.

### Example 4

A rubber specimen was prepared in the same manner as in Example 1 except that the bio-elastomer of Preparation Example 4 was used instead of the bio-elastomer of Preparation Example 1.

### Example 5

A rubber specimen was prepared in the same manner as in Example 1 except that the bio-elastomer of Preparation Example 5 was used instead of the bio-elastomer of Preparation Example 1.

### Comparative Example 1

A rubber specimen was prepared in the same manner as in Example 1 except that a blending (Na) method of Table 3 was used.

### Comparative Example 2

A rubber specimen was prepared in the same manner as in Example 1 except that the liquid polymer of Comparative Preparation Example 1 was used instead of the bio-elastomer of Preparation Example 1.

### Comparative Example 3

A rubber specimen was prepared in the same manner as in Example 1 except that the liquid polymer of Comparative Preparation Example 2 was used instead of the bio-elastomer of Preparation Example 1.

### [Analysis of rubber composition]

### Experimental Example 2

### 1) Viscoelastic properties

Viscoelastic properties were confirmed with a tan δ value by measuring a viscoelastic behavior with respect to dynamic deformation at a frequency of 10 Hz and a measurement temperature (60°C) in a Film Tension mode using a dynamic mechanical analyzer (GABO Company). The lower the 60°C tanδ value in the measured value, the lower the hysteresis loss and the better the low running resistance (fuel economy), but a reference value of the viscoelastic properties (Comparative Example 1) was specified and then represented as an index (%) to describe that the higher the value, the better.

### 2) Abrasion resistance

For each rubber specimen, a DIN abrasion test was performed in accordance with ASTM D5963, and the abrasion resistance was represented by a DIN loss index (loss volume index):ARIA (Abrasion resistance index, Method A) based on a measured value of Comparative Example 1. The higher the number, the better.

**[Table 4]**

| | Examples | | | | | Comparative Examples | | |
|---|---|---|---|---|---|---|---|---|
| | 1 | 2 | 3 | 4 | 5 | 1 | 2 | 3 |
| Tanδ 60°C (Index) | 101 | 100 | 98 | 98 | 97 | 100 | 82 | 87 |
| Abrasion resistance (Index) | 105 | 104 | 111 | 109 | 113 | 100 | 104 | 111 |

As shown in the above results, it was confirmed that Examples 1 to 5 exhibited excellent levels of viscoelastic properties and wear resistance in a balanced manner. On the other hand, Comparative Example 1 used process oil instead of a bio-elastomer, in which case it can be seen that the viscoelastic properties and wear resistance were slightly lower than those of Examples. In addition, instead of a bio-elastomer, Comparative Example 2 used the mixture of Comparative Preparation Example 1 and Comparative Example 3 used the mixture of Comparative Preparation Example 2, and both Comparative Examples 2 and 3 showed significantly lowered viscoelastic properties.

### Experimental Example 3

Aging properties were confirmed by the change in tensile properties before and after thermal aging of each rubber specimen, and it can be confirmed that the aging properties are excellent from the fact that the aging properties were maintained without any change before and after the aging.

Specifically, each rubber specimen was left to stand at 100°C for 24 hours to undergo thermal aging, and for each rubber specimen, tensile stress was measured at room temperature using a Universal Test Machine 4204 (Instron Company) tensile tester in accordance with the tensile test method of ASTM 412 before and after the aging.

At this time, a tensile stress value before the aging and a tensile stress value after the aging were described, and a ratio of the tensile stress value after the aging based on the same before the aging was calculated and shown together.

**[Table 5]**

| | Examples | | | | | Comparative Examples | | |
|---|---|---|---|---|---|---|---|---|
| | 1 | 2 | 3 | 4 | 5 | 1 | 2 | 3 |
| Tensile stress before aging (kg/cm²) | 263 | 265 | 260 | 252 | 258 | 251 | 265 | 263 |
| Tensile stress after aging (kg/cm²) | 242 | 244 | 245 | 242 | 248 | 203 | 232 | 234 |
| Tensile stress ratio before and after aging (%) | 92 | 92 | 95 | 96 | 96 | 81 | 88 | 89 |

As shown in the above result, the aging properties of the rubber compositions of Examples 1 to 5 were improved compared to those of the rubber compositions of Comparative Examples 1 to 3, so that it was confirmed that the change in tensile properties before and after the aging was reduced. As described above, it is confirmed that the rubber composition of the present invention includes a bio-elastomer including a first conjugated diene-based polymer-derived unit having a weight average molecular weight of less than 100,000 g/mol and a vegetable oil-derived unit, and a second conjugated diene-based polymer, and thus, exhibits equally excellent viscoelastic properties, wear resistance, and aging properties.

## Claims

1. A rubber composition comprising:
(a) a bio-elastomer including a first conjugated diene-based polymer-derived unit and a vegetable oil-derived unit, wherein the first conjugated diene-based polymer has a weight average molecular weight of less than 100,000 g/mol; and
(b) a second conjugated diene-based polymer.

2. The rubber composition of claim 1, wherein the first conjugated diene-based polymer has a weight average molecular weight of 1,000 g/mol to 80,000 g/mol.

3. The rubber composition of claim 1, wherein the vegetable oil is one or more selected from the group consisting of soybean oil, rapeseed oil, canola oil, sunflower oil, flaxseed oil, rice bran oil, palm oil, olive oil, peanut oil, palm oil, cottonseed oil, and coconut oil.

4. The rubber composition of claim 1, wherein the vegetable oil is an epoxidized vegetable oil, and is one or more selected from the group consisting of an epoxidized soybean oil, an epoxidized rapeseed oil, an epoxidized canola oil, an epoxidized sunflower oil, an epoxidized flaxseed oil, an epoxidized rice bran oil, an epoxidized palm oil, an epoxidized olive oil, an epoxidized peanut oil, an epoxidized palm oil, an epoxidized cottonseed oil, and an epoxidized coconut oil.

5. The rubber composition of claim 1, wherein the second conjugated diene-based polymer comprises a repeating unit derived from a conjugated diene-based monomer and a repeating unit derived from an aromatic vinyl-based monomer.

6. The rubber composition of claim 1, wherein the bio-elastomer is 5 parts by weight to 50 parts by weight based on 100 parts by weight of the second conjugated diene-based polymer.

7. The rubber composition of claim 1, further comprising a filler.

8. The rubber composition of claim 7, wherein the filler is one or more selected from the group consisting of a silica-based filler and a carbon-black filler.

9. A method for preparing a rubber composition, the method comprising the steps of:
(S1) preparing a bio-elastomer including a first conjugated diene-based polymer-derived unit and a vegetable oil-derived unit, wherein the first conjugated diene-based polymer has a weight average molecular weight of less than 100,000 g/mol;
(S2) preparing a second conjugated diene-based polymer by polymerizing a conjugated diene-based monomer, or a conjugated diene-based monomer and an aromatic vinyl-based monomer in the presence of a polymerization initiator in a hydrocarbon solvent; and
(S3) mixing the bio-elastomer and the second conjugated diene-based polymer.

10. The method of claim 9, wherein the step (S1) is performed by including the steps of:
preparing an active polymer having a weight average molecular weight of less than 100,000 g/mol by polymerizing a conjugated diene-based monomer; and
reacting the active polymer with the vegetable oil.

11. The method of claim 10, wherein the vegetable oil is 0.1 parts by weight to 50 parts by weight based on 100 parts by weight of the conjugated diene-based monomer.
